# FASCICULE DE BREVET EUROPEEN

(11) **EP 2 952 960 B1**
(45) Date de publication et mention de la délivrance du brevet: **07.09.2016**
(21) Numéro de dépôt: 15305844.1
(22) Date de dépôt: 02.06.2015
(51) Int. Cl.: G03B 15/06, G06T 1/00

(54) **DISPOSITIF ET PROCÉDÉ DE PRISE DE VUES 3D**
VORRICHTUNG UND VERFAHREN ZUR 3D-BILDAUFNAHME
3D SHOOTING DEVICE AND METHOD

(30) Priorité: 02.06.2014 FR 1454963
(43) Date de publication de la demande: 09.12.2015
(73) Titulaire: Unite de Production d'Images, 56260 Larmor-Place (FR)
(72) Inventeur: Leglatin, Yves, 56260 Larmor-Plage (FR)
(74) Mandataire: Jacobacci Coralis Harle

(56) Documents cités:
- US-A1- 2009 160 930
- US-B1- 6 513 941
- "Plateau tournant car360.fr avec Peugeot 207", , 24 juillet 2012 (2012-07-24), XP054975828, Extrait de l'Internet: URL:https://www.youtube.com/watch?v=63k_RX zmc58#t=20 [extrait le 2015-04-20]
- "Studio18 / Location de plateaux - AUDI A6 Touring", , 2 avril 2014 (2014-04-02), XP054975829, Extrait de l'Internet: URL:https://www.youtube.com/watch?v=Lhoroi xU3n4 [extrait le 2015-04-20]

## Description

La présente invention concerne un dispositif de prise de vues 3D destinés à la visualisation d'un véhicule automobile sous différents angles.

Les logiciels de réalité virtuelle, quelquefois appelés de réalité augmentée, permettent une représentation informatique, sur écran ou par impression, directement sur un ordinateur équipé du logiciel correspondant ou à distance au travers d'un réseau, d'un objet tridimensionnel.

Cette représentation est obtenue à partir de prises de vue de l'objet par un ou des appareils photographiques sous des angles différents.

L'objet de la présente invention est une installation permettant ces prises de vue de manière simplifiée et rapide pour un grand nombre de véhicules automobiles.

Elle permet la constitution d'une bibliothèque de photographies homogènes, dûment identifiées en peu de temps.

Les véhicules automobiles ne sont ainsi immobilisés qu'un bref moment, quelques minutes, et restent disponibles pour toute autre utilisation.

Les dispositifs de prises de vues 3D sont le plus souvent utilisés pour un petit nombre d'objets spécialement d'une série, souvent très différents les uns des autres. Or des usages se développent maintenant visant à la constitution de collection d'objets relativement homogènes, par exemple des véhicules automobiles. On entend ici par véhicules automobiles des voitures, camions, camping-car ou motos. Il s'agit généralement de véhicules se déplaçant sur roues. Dans certains cas, par exemple celui des motos il peut être utile de placer un véhicule sur un support facilitant son déplacement et assurant sa stabilité.

Ces prises de vues et la visualisation en réalité virtuelle en résultant peuvent être utilisées pour la promotion, la vente ou encore pour la réalisation d'expertises.

Les documents US 2009/160930 A1 et US 6,513,941 B1 décrivent un dispositif de prise de vues 3D d'un véhicule automobile, le dispositif comportant deux appareils photographiques disposés autour d'un plateau rotatif recevant le véhicule automobile.

La durée d'immobilisation des véhicules pendant la mise en place et la prise de vues doit être réduite au maximum, ce qui permet aussi d'améliorer les conditions de travail des personnes procédant aux opérations nécessaires.

Le but de l'invention est donc de proposer un dispositif optimisant la mise en place du véhicule et assurant les prises de vues, l'identification et l'archivage des fichiers, et éventuellement leur insertion dans un logiciel de réalité virtuelle.

Ainsi, l'invention concerne un dispositif de prise de vues 3D d'un véhicule automobile selon la revendication 1 annexée.

Selon l'invention, il comporte des moyens de mesure de la position du véhicule constituant une assistance au conducteur le positionnant sur le plateau et permettant le positionnement du centre dudit véhicule au point de convergence de l'axe de rotation du plateau et des axes de prise de vue des appareils photographiques.

Ce positionnement est approché, la précision requise dépendant des conditions d'éclairage, des appareils photographiques et de la qualité des photographies recherchée.

De manière préférée, dans différents modes de réalisation de ce dispositif présentant chacun leurs avantages respectifs:
- il comporte des moyens de mesure de l'avancement du véhicule permettant d'indiquer au conducteur le positionnement approché du centre du véhicule sur l'axe de rotation du plateau.
- il comporte des moyens de mesure de la longueur du véhicule commandant les champs des appareils photographiques de telle sorte que ceux-ci sont optimisés en fonction de la dite longueur.
- il comporte un automate recevant les mesures, assistant le conducteur et un opérateur et commandant les prises de vues.
- l'automate comporte des moyens de stockage de données informatiques dans lesquels les photographies sont collectées associées à l'identification du véhicule.
- il comporte des moyens de prise de vues intérieures du véhicule, les vues correspondantes étant collectées avec les autres données et vues.

Le dispositif peut mettre en oeuvre un procédé de prise de vues 3D d'un véhicule comportant les étapes suivantes:
- Mise en place du véhicule à une position et selon une orientation de référence
- Création d'un dossier informatique d'archivage correspondant au véhicule
- Photographie de la plaque d'immatriculation arrière et stockage de cette photographie dans le dossier informatique
- Saisie du numéro d'immatriculation du véhicule qui est associé au dossier
- Masquage des plaques d'immatriculation
- Prise d'une photographie générique et stockage de cette photographie dans le dossier informatique
- Prises de vues «eye bee » et stockage de ces photographies dans le dossier informatique

Il peut également comporter une étape de prise de vues intérieures et de leur stockage dans le dossier informatique

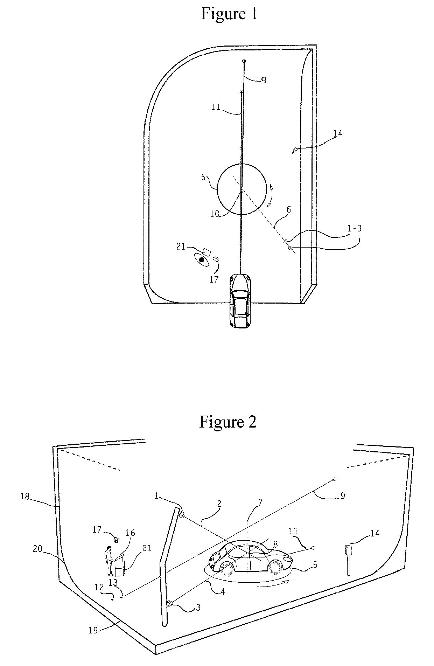

Un mode de réalisation de l'invention sera décrit à titre d'exemple, plus en détail en référence aux dessins annexés dans lesquels
- la figure 1 est un vue du dessus dispositif de l'invention;
- la figure 2 est une vue en perspective du dispositif de la figure 1;

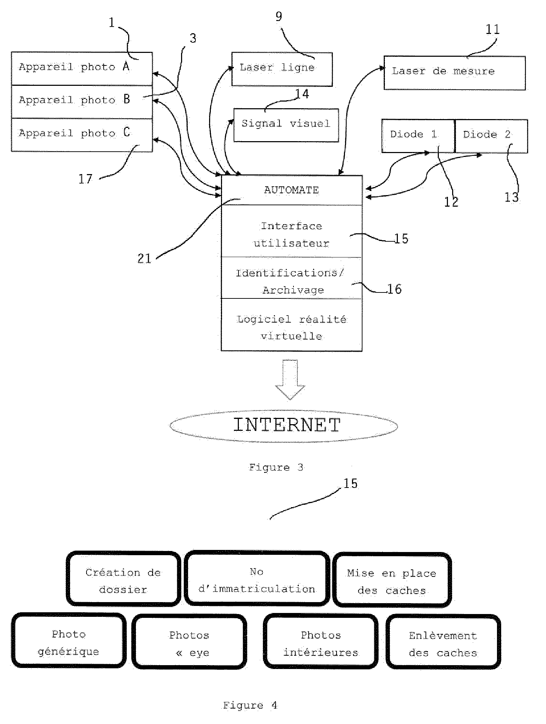

- la figure 3 est une représentation schématique de l'automate;
- la figure 4 représente l'écran d'interface utilisateur de l'automate;

Le dispositif de prise de vues comporte au moins deux appareils photographiques 1 et 3 ayant des axes de prise de vues respectivement 2 et 4 et un plateau 5 mobile en rotation autour d'un axe 7 le plus souvent vertical. Les appareils photographiques 1 et 3 sont positionnés sur un plan 6 parallèle à l'axe 7 et donc en principe vertical. Les axes de prise de vues 2 et 4 convergent vers l'axe de rotation du plateau au point 8 où sera positionné le centre du véhicule.

Cet ensemble a pour but la prise de photographies compatibles avec un logiciel de réalité virtuelle, ses éléments sont positionnés dans une installation de prise de vue. Cette installation assure un éclairage convenable de l'objet dans un décor ambiant sur fond neutre. Avantageusement une liaison continue, courbe 20 est prévue entre le sol 18 et le mur 19 derrière le véhicule face aux appareils photographiques. Ainsi on évite que les images ne soient chargées de la ligne d'arrête que cette courbe 20 masque. Une disposition analogue permet de masquer l'arrête de liaison des murs situés derrière le véhicule.

La distance entre les appareils photographiques doit permettre l'acquisition de photographies sous des angles, en hauteur, différents. La rotation du plateau permet l'acquisition d'un nombre de photographies prédéterminé fournissant des vues de tous les côtés de l'objet.

La précision des positionnements indiqués dans cette description dépend de la qualité des photographies recherchées et des conditions d'éclairage.

En particulier, la meilleure profondeur de champ est obtenue lorsque le point visé est placé au tiers avant de la profondeur de champ voulue.

L'ensemble des prises de vues comporte une vue générique prise lorsque l'objet est présenté de ¾ face par rapport à l'axe de prises de vues. Cette vue est complétée par des vues « eye bee» prises par chacun des appareils photographiques au cours de la rotation de l'objet sous des angles différents régulièrement espacés, par exemple de 15°.

Le positionnement convenable du véhicule ou objet, sur le plateau tournant 5 est obtenu, en direction, par l'assistance d'un laser ligne 9 visualisant un plan vertical passant par le centre 10 du plateau tournant 5 et par la position moyenne du véhicule lors de son entrée dans le dispositif. La direction du faisceau du laser ligne 9 est variable, elle balaie le plan vertical indiqué.

Le laser ligne 9 définit ainsi un plan dont l'intersection avec les objets matériels, forme une ligne visible par le conducteur positionnant le véhicule. Le conducteur assure le positionnement relatif du véhicule et de ce plan, faisant en sorte que ce plan coupe le véhicule en son milieu. Le laser ligne 9 éclaire le véhicule, en particulier la planche de bord et les dossiers des sièges ce qui est facilement observable par le conducteur, lui permettant d'atteindre très rapidement, simplement et avec une bonne précision le centrage recherché. Ainsi l'orientation et le positionnement latéral du véhicule est réalisé.

Le laser ligne 9 est positionné face à la direction d'entrée du véhicule dans l'installation, à une implantation, une hauteur et une orientation suffisantes pour ne pas occasionner de risque d'éblouissement du conducteur du véhicule par un éclairage direct de ses yeux, quel que soit le véhicule. En pratique cette hauteur sera avantageusement comprise entre 3 et 4 mètres. Ce laser ligne, émettant avantageusement une lumière verte, ne sera activé que lors du positionnement du véhicule, il sera éteint lors des prises de vues.

Pour centrer convenablement le véhicule reste à assurer son positionnement en profondeur dans l'installation sur le centre du plateau tournant 5. Des moyens de mesure de longueur sont utilisés à cet effet.

Ces moyens de mesure de longueur comportent un laser 11 de mesure de distance, des diodes 12, 13 de mesure de position, affleurant le sol et un signal 14 visuel visible par le conducteur.

Le laser 11 de mesure de distance comporte un laser émetteur, produisant un faisceau avantageusement rouge et un récepteur recevant le faisceau émis après réflexion sur un objet dont la distance est à mesurer. De manière classique dans ce type de dispositif, le décalage temporel entre le signal émis et le signal reçu permet d'accéder à la distance du réflecteur.

Le plus souvent, pour la mesure de la distance d'un véhicule, en général de son avant, il est souhaitable de positionner un réflecteur catadioptrique recouvrant la plaque minéralogique. C'est ce réflecteur qui coopère avec le laser 11 de mesure de distance. De plus, pour optimiser ces mesures le laser 11 de mesure de distance comporte des moyens de balayage dans un plan vertical. Au cours d'un balayage, le meilleur signal de retour est recherché. La mesure elle-même est réalisée lorsque que ce signal a été trouvé. Cette mesure est ainsi réalisée lorsque le faisceau a été réfléchi par le réflecteur catadioptrique évitant tout risque d'une mesure parasite, qui serait faite par réflexion sur tout autre élément du véhicule. Ces modalités permettent aussi d'assurer la compatibilité du dispositif avec de nombreux types de véhicule dont les plaques minéralogiques peuvent être à des hauteurs et des positions variées.

Les diodes de position 12 et 13 placées au niveau du sol au voisinage de l'entrée du véhicule dans l'installation permettent d'identifier le positionnement en profondeur de l'avant, puis de l'arrière du véhicule.

Le fonctionnement de ces moyens de positionnement en profondeur est le suivant:
- Une première mesure de distance d1 est faite lors de la détection de l'avant du véhicule par les diodes 12 et 13.
- Une deuxième mesure de distance d2 est faite lors de la détection de l'arrière du véhicule par les diodes 12 et 13.
- L'automate 21 qui reçoit ces mesures calcule par différence, la longueur 1 du véhicule et en déduit la distance d3 de son avant à rechercher pour qu'il soit convenablement positionné en profondeur et donc centré sur le plateau 5.
- Par une mesure de distance en continu reçu par l'automate 21, celui-ci commande le signal 14 qui indique au conducteur qu'il est parvenu à la position recherchée qui correspond à la distance d3. Bien entendu, le chauffeur doit alors arrêter le véhicule.

Le véhicule étant ainsi convenablement positionné sur le plateau tournant les prises de vues peuvent être réalisées
- L'automate 21 commande le réglage de champ des appareils photographiques en fonction de la longueur mesurée du véhicule.
- Le plateau 5 oriente le véhicule pour la prise de vue générique qui est réalisée en ¾ face.
- Le plateau engage un mouvement séquentiel pour la réalisation de prise de vues « eye bee ».
- Les photographies intérieures sont réalisées.

L'ensemble du procédé de constitution des fichiers de réalité virtuelle permis par cette installation est assisté par l'automate 21 et déclenché par le conducteur-opérateur au travers d'un interface utilisateur 15 porté par un pupitre 16. Il est le suivant :
- L'installation est initialisée en position de démarrage. Le plateau est orienté en position d'accueil du véhicule dite position 00, les lasers ligne 9 et de mesure 11 sont activés, le signal visuel est vert, l'opérateur place le réflecteur catadioptrique sur la plaque minéralogique avant. Lorsque le plateau n'est pas occupé le signal 14 est donc vert. Il passe au rouge dès le positionnement du véhicule et jusqu'à ce que l'ensemble des étapes soient finalisées;
- L'opérateur-conducteur positionne le véhicule sur le plateau tournant avec l'assistance des moyens décrits plus haut, guidage transverse par le laser ligne 9 et positionnement en profondeur par les moyens de mesures 11. Simultanément le champ des appareils photographiques est réglé
   -- L'opérateur, interagit alors avec la console 15 de l'automate.
      - Il initialise l'ouverture d'un nouveau dossier (étape 1). L'automate commande la rotation du plateau et donc du véhicule vers la position de la première prise de vue appelée «générique». Le véhicule est alors orienté de ¾ face par rapport à l'axe de prises de vues.
      - Il photographie la plaque d'immatriculation arrière du véhicule qu'il vient de mettre en place et saisit le numéro d'immatriculation du véhicule pour l'associer au dossier (étape 2).
      - Il cache les plaques d'immatriculation ce qu'il valide sur l'automate (étape 3).
      - Il commande la photographie générique (étape 4).
      - Il commande les prises de vues «eye bee » (étape 5).
      - Il réalise les photographies intérieures (étape 6).
      - Il retire les caches des plaques minéralogiques (étape 7).

L'automate commande la rotation du plateau et donc du véhicule pour l'orienter en position de sortie en marche avant. Le véhicule peut alors être déchargé du plateau tournant et l'installation réinitialisée pour le véhicule suivant.

## Revendications

1. Dispositif de prise de vues 3D d'un véhicule automobile, comportant au moins deux appareils photographiques (1, 3) distants l'un de l'autre sur un plan de photographie (6) et un plateau (5) destiné à recevoir ledit véhicule automobile et apte à tourner autour d'un axe de rotation (7) parallèle au plan de photographie (6), les axes de prise de vue (2,4) des appareils photographiques (1, 3) convergeant sur l'axe de rotation (7) du plateau (5) en un point de convergence (8), et étant placés à égale distance de celui-ci,
**caractérisé en ce qu'**il comporte des moyens de mesure de la position du véhicule (11, 12, 13, 14) constituant une assistance au conducteur le positionnant sur le plateau (5) et permettant le positionnement du centre dudit véhicule au point de convergence (8) de l'axe de rotation (7) du plateau (5) et des axes de prise de vue (2, 4) des appareils photographiques (1,3), et **en ce qu'**il comporte un laser ligne (9) ayant un plan de balayage de faisceau, ledit plan contenant l'axe de rotation (7) du plateau (5), l'émission de ce laser étant orienté vers le véhicule lors de son positionnement sur le plateau, ledit laser formant une ligne visible dans le véhicule que le conducteur peut prendre pour référence de direction et de position transverse.

2. Dispositif de prise de vues 3D selon la revendication 1, **caractérisé en ce qu'**il comporte des moyens de mesure de l'avancement du véhicule (11,12,13) permettant d'indiquer au conducteur le positionnement du centre du véhicule sur l'axe de rotation (7) du plateau (5).

3. Dispositif de prise de vues 3D selon l'une quelconque des revendications 1 à 2, **caractérisé en ce qu'**il comporte des moyens de mesure de la longueur du véhicule (11, 12, 13) commandant les champs des appareils photographiques (1, 3) de telle sorte que ceux-ci sont optimisés en fonction de ladite longueur.

4. Dispositif de prise de vues 3D selon l'une quelconque des revendications 1 à 3, **caractérisé en ce qu'**il comporte un automate (21) recevant les mesures, assistant le conducteur et un opérateur et commandant les prises de vues.

5. Dispositif de prise de vues 3D selon l'une quelconque des revendications 1 à 4, **caractérisé en ce que** l'automate (21) comporte des moyens de stockage de données informatiques dans lesquels les photographies sont collectées associées à l'identification du véhicule.

6. Dispositif de prise de vues 3D selon l'une quelconque des revendications 1 à 5, **caractérisé en ce qu'**il comporte des moyens de prise de vues intérieures (17) du véhicule, les vues correspondantes étant collectées avec les autres données et vues.

## Patentansprüche

1. Vorrichtung zur 3D-Bildaufnahme eines Kraftfahrzeugs, mit wenigstens zwei auf einer Fotoebene (6) voneinander entfernten Fotoapparaten (1, 3) und einer Plattform (5), die dazu bestimmt ist, das Kraftfahrzeug aufzunehmen, und die geeignet ist, sich um eine zur Fotoebene (6) parallele Drehachse (7) zu drehen, wobei die Bildaufnahmeachsen (2, 4) der Fotoapparate (1, 3) zur Drehachse (7) der Plattform (5) hin in einem Konvergenzpunkt (8) zusammenlaufen und in gleichem Abstand von diesem angeordnet sind,
**dadurch gekennzeichnet, daß** sie Mittel (11, 12, 13, 14) zum Messen der Position des Fahrzeugs auf der Plattform (5) aufweist, die für den selbiges auf der Plattform (5) positionierenden Fahrer eine Hilfe darstellen und ein Positionieren des Mittelpunkts des besagten Fahrzeugs im Konvergenzpunkt (8) der Drehachse (7) der Plattform (5) und der Bildaufnahmeachsen (2, 4) der Fotoapparate (1, 3) ermöglichen, und daß sie eine eine Strahlabtastebene aufweisende Laserlinie (9) aufweist, wobei die besagte Ebene die Drehachse (7) der Plattform (5) beinhaltet, wobei die Strahlung des Lasers während dessen Positionierens auf der Plattform auf das Fahrzeug gerichtet ist, wobei der Laser im Fahrzeug eine sichtbare Linie bildet, die der Fahrer als Richtungsbezug und Querpositionsbezug nehmen kann.

2. Vorrichtung zur 3D-Bildaufnahme gemäß Anspruch 1, **dadurch gekennzeichnet, daß** sie Mittel (11, 12, 13) zum Messen des Vorrückens des Fahrzeugs aufweist, die ermöglichen, dem Fahrer das Positionieren des Mittelpunkts des Fahrzeugs auf der Drehachse (7) der Plattform (5) anzuzeigen.

3. Vorrichtung zur 3D-Bildaufnahme gemäß einem der Ansprüche 1 bis 2, **dadurch gekennzeichnet, daß** sie Mittel (11, 12, 13) zum Messen der Länge des Fahrzeugs aufweist, die die Sichtfelder der Fotoapparate (1, 3) so steuern, daß diese in Abhängigkeit von der besagten Länge optimiert werden.

4. Vorrichtung zur 3D-Bildaufnahme gemäß einem der Ansprüche 1 bis 3, **dadurch gekennzeichnet, daß** sie einen die Messungen empfangenden Automaten (21) aufweist, der den Fahrer und einen Bediener unterstützt und die Bildaufnahmen steuert.

5. Vorrichtung zur 3D-Bildaufnahme gemäß einem der Ansprüche 1 bis 4, **dadurch gekennzeichnet, daß** der Automat (21) Informatikdatenspeichermittel aufweist, in denen die Fotos zusammen mit der Identifizierung des Fahrzeugs gesammelt werden.

6. Vorrichtung zur 3D-Bildaufnahme gemäß einem der Ansprüche 1 bis 5, **dadurch gekennzeichnet, daß** sie Mittel (17) zum Ausführen von Innenaufnahmen des Fahrzeugs aufweist, wobei die entsprechenden Aufnahmen mit des anderen Daten und Ansichten gesammelt werden.

## Claims

1. A 3D shooting device of a motor vehicle, including at least two cameras (1, 3) remote from each other on a photography plane (6) and a plate (5) intended to receive said motor vehicle and adapted to rotate about an axis of rotation (7) parallel to the photography plane (6), the shooting axes (2, 4) of the cameras (1, 3) converging to the axis of rotation (7) of the plate (5) into a point of convergence (8), and being placed at equal distance from the latter,
**characterized in that** it includes means for measuring the position of the vehicle (11, 12, 13, 14), constituting an aid for the driver positioning it on the plate (5) and allowing the positioning of the centre of said vehicle at the point of convergence (8) of the axis of rotation (7) of the plate (5) and shooting axes (2, 4) of the cameras (1, 3), and **in that** it includes a line laser (9) having a beam sweeping plane, said plane containing the axis of rotation (7) of the plate (5), the emission of this laser being oriented towards the vehicle at its positioning on the plate, said laser forming in the vehicle a visible line that the driver can take as a transverse direction and position reference.

2. The 3D shooting device according to claim 1, **characterized in that** it includes means for measuring the progression of the vehicle (11, 12, 13), allowing to indicate to the driver the positioning of the centre of the vehicle on the axis of rotation (7) of the plate (5).

3. The 3D shooting device according to any one of claims 1 to 2, **characterized in that** it includes means for measuring the length of the vehicle (11, 12, 13), controlling the fields of the cameras (1, 3) in such a manner that these latter are optimized as a function of said length.

4. The 3D shooting device according to any one of claims 1 to 3, **characterized in that** it includes an automaton (21) receiving the measurements, aiding the driver and an operator and controlling the shootings.

5. The 3D shooting device according to any one of claims 1 to 4, **characterized in that** the automaton (21) comprises computer data storing means in which the pictures are collected, associated with the identification of the vehicle.

6. The 3D shooting device according to any one of claims 1 to 5, **characterized in that** it includes inner shooting means (17) of the vehicle, the corresponding views being collected with the other data and views.
